# EUROPEAN PATENT APPLICATION

(11) **EP 0 703 491 A1**
(43) Date of publication of application: **27.03.1996**
(21) Application number: 94202756.6
(22) Date of filing: 26.09.1994
(51) Int. Cl.: G03C 1/04, G03C 1/31, G03C 1/76

(54) **A photographic silver halide material comprising a dendrimeric latex**

(71) Applicant: AGFA-GEVAERT naamloze vennootschap, B-2640 Mortsel (BE)
(72) Inventor: De Winter, Walter, B-2640 Mortsel (BE); Desie, Guido, B-2640 Mortsel (BE); Van Trier, Jean, B-2640 Mortsel (BE); Timmermann, Ralf, B-2640 Mortsel (BE)

(57) **Abstract**

A silver halide photographic material is provided, comprising at least one layer comprising an hydrophilic colloid, characterised in that said photographic material comprises in said at least one layer a dendrimeric latex.

## Description

### 1. Field of the Invention.

This invention relates to silver halide photographic materials comprising polymer latices in at least one hydrophilic layer. More especially it relates to the incorporation of a dendrimer latex into at least one hydrophilic layer of a silver halide photographic material.

### 2. Background of the Invention.

The use of polymeric latices in silver halide photographic materials is well known in the art. By polymeric latex has to be understood within the scope of the present invention an aqueous dispersion of oligomeric or polymeric particles having an average diameter lower than 0.5 µm. The addition of polymeric latices can serve various purposes. E.g. in EP 188 753 and EP 410 820 the use of such polymeric latices as binder materials in antistatic layers is disclosed. In e.g. EP 226 129 it is disclosed to use polymeric latices loaded with hydrophobic PUG's (Photographic Useful Groups) in order to incorporate said PUG's in the hydrophilic layers of a silver halide photographic material; in US-P 5,242,787 the use of latices grafted with polyalkylene oxide as development accelerator is disclosed. Also an enhancement in adhesion between support and hydrophilic layers in silver halide photographic materials can be reached by the use of polymeric latices in the subbing layer (see e.g. EP 260 203).

Polymeric latices have been used a elastic stress absorbing agents in silver halide photographic materials, as disclosed in e.g. US-P 5,026,632 and WO 91/14968, to prevent problems with pressure and stress.

Polymeric latices are widely used in silver halide photographic materials to improve the dimensional stability of the material; this use of polymeric latices has been disclosed in i.a. EP 279 450, EP 514 903, JN 03/141346 etc.

These are only a few examples of the frequent use of polymeric latices in silver halide photographic materials and the advantages of this use are well known and recognized in the art. However the use of polymeric latices brings also, in most cases, an increase in the amount of water that is absorbed in the hydrophilic layers of the silver halide photographic material during processing. Higher water absorption poses a problem when the silver halide material is intended for rapid processing. The speed limiting step in rapid processing processing is, in most of the cases, the drying step (following a development and fixing step) in which the water absorbed in the silver halide photographic material has to be evaporated. Therefore, it is a necessity for silver halide materials intended for rapid processing that the water content of the hydrophilic layers, before entering the drying step is as low as possible. There is thus still a need for polymeric latices that combine the advantages of the prior art polymeric latices with a lower water absorption.

### 3. Objects and Summary of the Invention.

It is an object of the invention to provide polymeric latices that have a low water absorption when incorporated in an hydrophilic layer of a silver halide photographic material.

It is an other object of the invention to provide silver haide photographic materials comprising polymeric latices with narrow molecular weight distribution.

It is a further object of the invention to provide silver halide photographic materials comprising polymeric latices with reactive sites on the surface of the latex particles such as to be able to easily attach Photographic Useful Groups (PUG's) to said surface of said latices.

It is another object of the invention to provide silver halide photographic materials, that in at least one of the layers comprises a polymeric latex that has a low water absorption.

Further objects and advantages of the inventiion will become clear from the description hereinafter.

The objects of the invention are realized by providing a silver halide photographic material, comprising at least one layer comprising a hydrophilic colloid, characterised in that said photographic material comprises in said at least one layer a dendrimeric latex. In a preferred embodiment said dendrimeric latex is a dendrimer of the third to tenth generation. In a further preferred embodiment said dendrimeric latex is of the fifth to seventh generation.

### 4. Detailled Description of the Invention.

Highly branched, non-crosslinked polymers have been prepared by "multiple generation" and "single generation" procedures. Dendrimeric latices for use in the present invention, have been prepared by a multiple generation procedure. Such procedures have been exemplified e.g. by Tomalia, D.A. and others in Angewandte Chemie, International Edition in English, 29, 138-175 (1990), In EP-A 066 366, WO 84/2705, WO 93/14147 etc. In these disclosures preparations are described wherein highly branched non-cross-linked polymers or oligomers are produced (e.g. polyamidoamines and polybenzyl ethers). The polymers where termed "starburst polymers" or "starburst dendrimers", in short "dendrimers".

Several ways for carrying out the synthesis of dendrimeric molecules have been disclosed, e.g. in EP-A 582 842, EP-A 583 608, EP-A 583 609, WO 93/017060, WO 93/14147, J. Am. Chem. Soc **1992**, *114*, p. 8405-8413, etc..

The procedure described in WO 93/01760 is relatively simple and less time consuming than earlier procedures.

Dendrimeric compounds are commercially available through DSM of the Netherlands and DENDRITECH of the USA.

For use in hydrophilic layers of a silverhalide material it is preferred to synthesize dendrimeric polymers that carry functional groups as end-groups. These dendrimers are preferred because they can easily be reacted further to include photographic useful groups (PUG's) at the surface of the dendrimeric particle. An example of loading dendrimeric polymers can be found in e.g. EP 271 180.

It is e.g. possible to attach polyalkylene oxides to said dendrimers. Since polyalkylene oxides are known as development accelerators, dendrimers carrying such groups do present the possibility to incorporate development accelerators into the photographic materials.

The incorporation of PUG's at the surface of the dendrimeric particle can easily proceed via dendrimers carrying functional groups as e.g. -NH₂ or OH groups.

Dendrimeric polymers terminated by hydroxyl groups are also interesting molecules for use as softener/plasticizer in silver halide photographic materials. Said silver halide photographic materials may be of any type, e.g. negative or positive working, black and white or colour, useful in diffusion transfer process, in radiography (both medical and industrial), etc..

Silver halide photographic materials may comprise various hydrophilic layers in addition to at least one silver halide emulsion layer : the material may further comprise, e.g., an outermost hydrophilic colloid comprising layer, a hydrophilic colloid comprising undercoat, an hydrophilic colloid comprising backing layer, etc. The dendrimeric latices can be incorporated in any one or all of the hydrophilic colloid comprising layers comprised in a silver halide photographic material. Preferably said dendrimeric latices are comprised in said at least one silver halide emulsion layer and/or in said outermost hydrophilic colloid comprising layer.

When adding dendrimeric polymers to hydrophilic layers of a silver halide photographic material it is preferred to add between 10 and 50 % in weight (% w/w) of the dendrimer with respect to the hydrophilic colloid( generally gelatin) present in the photographic product, preferably between 15 and 30 % w/w.

Dendrimeric polymers useful according to the present invention are dendrimers from the third to the thenth generation, preferably from the fifth to the seventh generation.

### PREPARATION EXAMPLES

The preparations proceeded along the lines of the disclosures cited above.

### PREPARATION EXAMPLE 1 : Terminated by an ester function (DEN1)

i. Preparation of the starting product : 2,2,2-Trichloroethyl-3,5-Dihydroxybenzoate (1).
   To freshly distilled 2,2,2-trichloroethanol (25 mL) was added 3,5-dihydroxybenzoic acid (4.50 g, 29.2 mmol) followed by concentrated sulphuric acid (1.0 mL), and the mixture was stirred vigorously and heated at 90 °C for 48 h under nitrogen. The reaction mixture was cooled and evaporated to dryness under reduced pressure. The crude product was purified by flash chromatography eluting with CH₂Cl₂.
ii. Preparation of the Dendrimeric Polyester Macromolecules : 2,2,2-Trichloroethyl-3,5-Bis(benzoyloxy)benzoate (2) and General Procedure for Ester Formation.
   To a solution of benzoic acid (2.21 g, 18.1 mmol) in dry dichloromethane (20 mL) was added the diphenolic monomer unit 1 (2.25 g, 7.88 mmol) followed by 4-(dimethylamino)-pyridinium p-toluenesulphonate (DPTS) (600 mg, 2.1 mmol), and the mixture was stirred at room temperature under nitrogen for 15 min. Dicyclohexylcarbodiimide (DCC) (3.73 g, 18.1 mmol) was then added and stirring continued at room temperature until the reaction had reached completion (ca. 15 min; during this time, a heavy precipitate of di-cyclohexylurea appeared. The reaction mixture was filtered, and the filtrate was evaporated to dryness under reduced pressure. The reaction mixture was filtered and purified by flash chromatography, eluting with 1:1 hexane/CH₂Cl₂. This gave ester terminated dendrimer DEN1.

### PREPARATION EXAMPLE 2 : An Aminogroup terminated dendrimer DEN2

12000 ml of methanol and 150 g (1.7 mol) of 1,4-diaminobutane (DAB, substrate) were introduced into a 2-litre three-necked flask equipped with a stirrer, a cooler, a thermometer and a dropping funnel. After this mixture had been cooled to a temperature of 10 °C a solution of 400 g (7.6 mol) of acrylonitrile (ACN) in 100 ml of methanol was added dropwise in 2 hours. Then the reaction mixture thus obtained was heated for 16 hours (temperature 40 °C).

After the mixture had subsequently cooled to room temperature both the methanol and the excess acrylonitrile were evaporated under reduced pressure. The residue thus obtained was dissolved in methanol at a temperature of 50 °C, after which, after crystallization and isolation, the desired product, i.e. the desired tetranitrile, was obtained in a pure form, as white needles; the product was found to have a melting point of 52.8 °C. The yield was 92 %.

Analysis of the isolated product by means ¹H and ¹³C NMR spectroscopy and mass spectrometry showed that the product obtained was DAB(ACN)₄.

### PREPARATION EXAMPLE 3 : A Hydroxylgroup terminated dendrimer DEN3

This preparation was carried out along the lines of the disclosure in example 51 of WO93/17060.

A hyperbranched polyester was prepared as a so called 9 generations dendrimer.

The polyester synthesis was in 8 steps carried out in a flanged reaction flask equipped with argon inlet, a Teflon® lined magnetic stirrer, a drying tube and a junction to water suction. The reaction flash was placed in an oil bath holding a constant temperature of 150 °C. Each of the 8 steps of the synthesis consisted of 2 hours of reaction with a stream of argon passing through the reaction mixture and 1 hour of reaction under vacuum.

The scheme of the synthesis was as follows and the reaction conditions as above :
- Step 1 :: 0.0056 mole of trimethylolpropane, 0.05 mole of dimethylolpropionic acid and 0.34 g of para-toluene sulphonic acid were charged.
- Step 2 :: 0.067 mole of dimethylolpropionic acid and 0.045 g of para-toluene sulphonic acid were added to the reaction product of step 1.
- Step 3 :: 0.13 mole of dimethylolpropionic acid and 0.09 g of paratoluene sulphonic acid were added to the reaction mixture of step 2.
- Step 4 :: 0.13 mole of dimethylolpropionic acid and 0.09 g of paratoluene sulphonic acid were added to 15.0 g of the reaction product of step 3.
- Step 5 :: 0.13 mole of dimethylolpropionic acid and 0.09 g of paratoluene sulphonic acid were added to 15.0 g of the reaction product of step 4.
- Step 6 :: 0.13 mole of dimethylolpropionic acid and 0.09 g of paratoluene sulphonic acid were added to 15.0 g of the reaction product of step 5.
- Step 7 :: 0.13 mole of dimethylolpropionic acid and 0.09 g of paratoluene sulphonic acid were added to 15.0 g of the reaction product of step 6.
- Step 8 :: 0.13 mole of dimethylolpropionic acid and 0.09 g of paratoluene sulphonic acid were added to 15.0 g of the reaction product of step 7.

The product obtained after the 8th reaction step was a 9 generations dendrimeric polyester having a theoretical molecular weight of 178000 g/mole.

### PHOTOGRAPHIC-PHYSICAL EXAMPLE

In this example the dimensional stability and the water absorption is compared of photographic material samples comprising no plasticizer, a control latex of 20 % polyethylacrylate (C-1) in an aqueous dispersion and a dendrimeric latex.

As dendrimeric latex an aqueous dispersion of the ester-terminated dendrimer DEN1 was used. This dispersion was prepared as follows : 6 % in weight of DEN1 were added to water under continuous stirring. This dispersion was added to the photographic material such as to have 20 % in weight of dendrimer present in the emulsion layer with respect to the gelatin comprised in said emulsion layer.

The photographic material was prepared as follows. A direct positive pure silver bromide emulsion was precipitated by a double jet technique and internally sensitized. The emulsion was then externally fogged using thiourea dioxide to obtain the desired sensitivity. Finally the emulsion was divided in aliquot portions and different latices were added to each portion as shown in table 1.

The coating solutions thus prepared were applied to a subbed polyethylene terephtalate base at a silver coverage, expressed as silver nitrate, of 3.18 g/m², and a gelatin coverage of 2.7 g/m². A protective layer was applied containing gelatin hardened with formaldehyde at a coverage of 0.7 g/m².

The dimensional change during processing is evaluated as follows. Each coated sample was conditioned in an acclimated room for at least 6 hours to a relative humidity of 30 % at 22 °C. Two holes with a diameter of 5 mm were punched at a distance of 200 mm in each film sample having dimensions of 35 mm x 296 mm. The exact interval between those holes was measured with an inductive half-bridge probe (TESA FMS100) having an accuracy of 1 µm, whereby this distance was called X µm. Subsequently the film material was subjected to processing in an automatic apparatus, a PAKO 26RA the dryer of which was equipped with an air-inlet. The samples were developed at 38 °C, fixed at 33 °C, rinsed without temperature control, and dried, wherefor air of 22 °C and of 30 % RH was provided through the air-inlet and wherefor the temperature was raised up to 55 °C . The distance between the two holes in the film is measured again after an acclimatisation period of 3 hours and is expressed as Y µm. The dimensional stability is calculated as (Y-X).5 and expressed in µm/m.

The water absorption was measured gravimetrically. A dry sample of the material was accurately weighted (W1) and then without exposure processed as discribed above, but taken out of the processing apparatus before the dryer. The processed, but not dried sample of the material was weighted again (W2) and after drying the sample was weighted again (W3). The difference between W2 and W3 was the water absorption of the sample, i.e. the amount of water per m² that has to be evaporated in the dryer.
The results are found in table 1.

**TABLE 1**

| Plasticizer in % w/w versus gelatine | Dimensional stability in µm | Waterabsorption g/m² |
|---|---|---|
| 0 | 105 | 4.35 |
| 50 % ethylacrylate (20 % in water), comparison latex | 66 | 5.55 |
| 20 % dendrimeric latex DEN1 | 68 | 4.80 |

It is clear that the addition of the dendrimeric latex gives the the same dimensional stability as the comparison latex, but with a lower latex content and with a water absorption comparable to the water absorption of the material where no latex is present.

## Claims

1. A silver halide photographic material, comprising at least one layer comprising an hydrophilic colloid, characterised in that said silver halide photographic comprises in said at least one layer a dendrimeric latex.

2. A silver halide photographic material according to claim 1, wherein said dendrimeric latex is a dendrimer from the third to tenth generation.

3. A silver halide photographic material according to claim 1, wherein said dendrimeric latex is a dendrimer from the fifth to seventh generation.

4. A silver halide photographic material according to any one of the preceding claims, wherein said dendrimeric latex is present in said at least one layer comprising an hydrophilic colloid in 10 to 50 % by weight with respect to the hydrophilic colloid.

5. A silver halide photographic material according to claim 4, wherein said dendrimeric latex is present in said at least one layer comprising an hydrophilic colloid in 15 to 30 % by weight with respect to the hydrophilic colloid.

6. A silver halide photographic material according to any of claims 1 to 5, wherein said at least one layer comprising a dendrimeric latex is an hydrophilic silver halide emulsion layer.

7. A silver halide photographic material according to claims 1 to 5, wherein said silver halide photographic material comprises an outermost hydrophilic layer and wherein said dendrimeric latex is present in said outermost hydrophilic layer.
